# EUROPÄISCHE PATENTSCHRIFT

(11) **EP 2 019 931 B1**
(45) Veröffentlichungstag und Bekanntmachung des Hinweises auf die Patenterteilung: **17.10.2012**
(21) Anmeldenummer: 07725370.6
(22) Anmeldetag: 18.05.2007
(51) Int. Cl.: F16C 33/58, F16C 33/66, F03D 11/00

(54) **LAGERANORDNUNG UND ZUMESSVENTIL UND ABSAUGEINRICHTUNG HIERFÜR**
BEARING ARRANGEMENT AND METERING VALVE AND SUCTION DEVICE THEREFOR
SYSTÈME DE PALIERS ET VALVE DOSEUSE ET DISPOSITIF D'ASPIRATION ASSOCIÉS

(30) Priorität: 23.05.2006 DE 202006008288 U; 19.07.2006 DE 202006011249 U; 10.04.2007 DE 202007005273 U
(43) Veröffentlichungstag der Anmeldung: 04.02.2009
(73) Patentinhaber: Lincoln GmbH, 69190 Walldorf (DE)
(72) Erfinder: PALUNCIC, Zdravko, 67067 Ludwigshafen (DE); TRINKEL, Ralf, 67229 Gerolsheim (DE)
(74) Vertreter: KEIL & SCHAAFHAUSEN Patentanwälte
(86) Internationale Anmeldenummer: PCT/EP2007/004462
(87) Internationale Veröffentlichungsnummer: WO 2007/134815

(56) Entgegenhaltungen:
- EP-A- 1 471 301
- EP-A- 1 712 829
- WO-A-01/63132
- GB-A- 2 201 200
- US-A- 3 195 965
- US-A- 3 314 735
- US-A- 3 722 967
- US-A- 4 759 427

## Beschreibung

Die Erfindung betrifft eine Lageranordnung mit einem Außenring und einem Innenring, welche relativ zueinander verdrehbar sind, und mit Wälzkörpern, insbesondere Kugeln, welche zwischen dem Außenring und dem Innenring angeordnet sind.

Wälzlager der eingangs genannten Art werden u. a. für Lagerungen in Windkraftanlagen, Baumaschinen oder dergleichen eingesetzt. Bei diesen Lagerungen ist häufig eine eigene Schmierstoffversorgung zum Abschmieren der Wälzkörper vorgesehen. Hierzu werden tellwelse Einleitungsverteiler (Injektoren) als Blockverteiler mit mehreren Zellen oder als Einzelzellenverteiler, die mit einer Verteilerleiste gehalten werden, eingesetzt. Bei beiden Varianten sind die Firileitungsverteiler mit Befestigungsbohrungen zum Befestigen entweder auf dem zu schmierenden Bauteil oder auf einer Halteplatte versehen. Der Schmierstoff wird dann von den Einleitungsverteilern (Injektoren) über eine Schmierleitung an die zu schmierende Stelle gefördert. Dies wird in einigen Anwendungsfällen aufgrund des für die Einleitungsverteiler benötigten Bauraums als nachteilig empfunden. Zudem besteht die Gefahr, dass die Schmierleitungen platzen, was zeit - und kostenintensive Reparaturarbeiten nach sich zieht.

Um ein unkontrolliertes Austreten von Schmierstoff zu vermeiden, werden bei Lageranordnungen teilweise Kunststoffflaschen vorgesehen, welche zur Aufnahme von austretendem Schmierstoff in radial verlaufende Kanäle eingeschraubt werden. Das regelmäßige Entleeren dieser teilweise nur schwer zugänglichen Flaschen wird als umständlich empfunden. Zudem besteht die Gefahr, dass Schmierstoff unkontrolliert aus der Lageranordnung austritt, wenn die Flasche nicht rechtzeitig entleert wird.

In der US 3,759,427 wird eine Düseneinrichtung beschrieben, mittels welcher konstant eine sehr kleine Menge von Schmieröl zuverlässig und ohne Leckölverluste einem zu schmierenden Objekt zugeführt werden soll. In einem Ausführungsbeispiel, das die Schmierung eines doppelreihigen Kugellagers ist eine Düse vorgesehen. Eine äußere Kugelschale eines Doppelrollenwälzlagers weist eine Öffnung auf, in welche die Düse eingeführt ist und sich bis in einen zwischen zwei Walzenreihen angeordneten Raum des Lagers erstreckt. Der Düsenkopf weist ferner einen ersten Abschnitt sowie einen zweiten zylindrischen Abschnitt auf, welche sich in dieser Reihenfolge an den Abschnitt in radialer Richtung nach außen hin anschließen. An der äußeren Mantelfläche des ersten Abschnitts ist ein Gewinde ausgebildet, mit welchem die Düse in ein Gehäuse eingeschraubt ist. Das Gehäuse selbst ist an der Außenseite der äußeren Kugelschale des Lagers angeordnet. Die bekannte Einrichtung enthält ferner ein Vinylröhrchen, mittels welchem das Schmieröl von der Schmieröl-Bereitstellungseinrichtung zu der Düse transportiert wird. Das düsenseitige Ende des Vinylröhrchens ist in einer innen liegenden durchgehenden Öffnung des ersten und des zweiten Abschnitts des Düsenkopfs angeordnet.

Aufgabe der vorliegenden Erfindung ist es demgegenüber, eine Lageranordnung der eingangs genannten Art zu schaffen, welche besonders Platz sparend und Kosten sparend das Abschmieren von beispielsweise Wälzkörpern bei hoher Betriebssicherheit ermöglicht.

Diese Aufgabe wird erfindungsgemäß im Wesentlichen dadurch gelöst, dass in dem Außenring und/oder in dem Innenring wenigstens eine Bohrung vorgesehen ist, in der ein Einleitungsverteiler oder dgl. Zumessventil als Einsatzpatrone aufgenommen ist, das mit einer Schmierstoffversorgung verbunden ist. Mit Diese Aufgabe wird durch eine Lageranordnung mit den Merkmalen des Anspruchs 1 gelöst.

Insbesondere ist in dem Außenring und/oder in dem Innenring wenigstens eine Bohrung vorgesehen. Die Bohrung ist dabei vorzugsweise radial verlaufend ausgebildet, es kann in Abhängigkeit der Einsatzbedingungen jedoch auch eine axial verlaufende Bohrung vorgesehen sein.

Erfindungsgemäß ist in der wenigstens einen Bohrung in dem Außenring und/oder In dem Innenring eine mit einem Schmierstoffsammelbehälter verbundene Absaugeinrichtung als Einsatzpatrone aufgenommen. Durch die Absaugvorrichtung kann der über das wenigstens eine Zumessventil der Lageranordnung zugeführte Schmierstoff wieder abgesaugt werden. Der Schmierstoff tritt daher nicht unkontrolliert aus der Lageranordnung aus, sondern wird einem Sammelbehälter zugeführt, aus welchem der Schmierstoff ggf. emeut zu der Lageranordnung gefördert werden kann. Ein Austausch von bisher üblichen Sammelflaschen, die direkt an der Lageranordnung vorgesehen waren, kann bei dieser Ausführungsform entfallen.

Die Erfindung ist dabei nicht nur auf die Anwendung bei einreihigen Kugellagern beschränkt, sondern die erfindungsgemäße Lageranordnung kann auch als ein zwei- oder mehrreihiges Lager mit Kugeln, Rollen oder dergleichen Wälzkörpern gestaltet sein.

Alternativ zu der Anordnung der Absaugeinrichtung in einer Bohrung der Lageranordnung ist erfindungsgemäß die wenigstens eine Absaugeinrichtung an der Außenseite des Innen- oder Außenrings derart befestigt, dass die wenigstens eine Bohrung in einen Schmierstoffeinlass der Absaugeinrichtung mündet. Dabei ist die wenigstens eine Absaugeinrichtung außen an dem Innen- oder dem Außenring angeflanscht.

In einer bevorzugten Ausführungsform ist in dem Außenring und/oder dem Innenring wenigstens eine weitere Bohrung vorgesehen, in der ein Einleitungsverteiler oder dgl. Zumessventil als Einsatzpatrone aufgenommen ist, das mit einer Schmierstoffversorgung verbunden ist. Mit anderen Worten ist das bspw. als Einleitungsverteiler ausgebildete Zumessventil derart ausgebildet, dass es als Einsatzpatrone in eine Bohrung eines Bauteils integrierbar ist. Wenn das Zumessventil als Einsatzpatrone unmittelbar in den Außenring oder den Innenring der Lageranordnung integriert ist, ist kein zusätzlicher Bauraum für die Anordnung von Blockverteilern oder Einzelzellenverteilern erforderlich. Gerade bei vergleichsweise großen Lageranordnungen, wie sie beispielsweise in Windkraftanlagen oder Baumaschinen eingesetzt werden, ist eine Platz sparende Anordnung der Zumessventile in der Lageranordnung selbst möglich. Da auch Verteilerleisten oder dergleichen entfallen, bringt die erfindungsgemäße Anordnung der Zumessventile als Einsatzpatronen in der Lageranordnung auch eine deutliche Kostenersparnis mit sich.

Zudem wird die Betriebssicherheit erhöht, da der Verteilerauslass jedes Zumessventils in direkter Verbindung mit der zu schmierenden Stelle steht. Da keine Schmierleitung vorhanden ist, besteht somit auch nicht die Gefahr, dass die Schmierfeitung aufgrund des hohen Gegendrucks platzt. Weiter wird auch der Austausch von Zumessventilen zu Reparatur oder Wartungszwecken vereinfacht, wenn diese als Einsatzpatronen gestaltet in einer Bohrung in dem Außenring oder dem Innenring der Lageranordnung aufgenommen sind.

Um eine optimale Schmierstoffversorgung und -rückführung bei der erfindungsgemäßen Lageranordnung zu erreichen, wird es bevorzugt, wenn jeder Wälzkörperreihe wenigstens ein Zumessventil und/oder wenigstens eine insbesondere durch den Druck des dem Zumessventils zugeführten Schmierstoffs antreibbare Absaugeinrichtung zugeordnet ist, wobei mehrere Zumessventile bzw. Absaugeinrichtungen über eine gemeinsame Schmierstoffversorgung miteinander verbunden sind.

Nach einer bevorzugten Ausführungsform der Erfindung ist das wenigstens eine Zumessventil bzw. eine Absaugeinrichtung über einen insbesondere in die wenigstens eine Bohrung eingeschraubten Adapter in dem Außenring bzw. dem Innenring der Lageranordnung fixiert und an die Schmierstoffversorgung angeschlossen. Der Adapter befestigt somit das beispielsweise nur in eine Bohrung eingesteckten und als Einsatzpatrone ausgebildeten Zumessventil bzw. die Absaugeinrichtung In dem Außenring bzw. dem Innenring der Lageranordnung. Gleichzeitig kann der Adapter dabei auch das Anschlusselement bilden, mit welchem das bspw. als Einleitungsverteiler (Injektor) ausgebildete Zumessventil mit der Schmierstoffversorgung verbunden ist. Vorzugsweise sind mehrere Absaugelnrichtungen über eine gemeinsame Rückführleitung mit einem Schmier stoffsammelbehälter verbunden.

Alternativ zu der Anordnung des Zumessventils in einer Bohrung der Lageranordnung kann das wenigstens eine Zumessventil an der Außenseite des Innen - oder des Außenrings derart befestigt sein, dass die wenigstens eine Bohrung in einen Schmierstoffauslass eines Zumessventils mündet. Dabei ist das wenigstens eine Zumessventil vorzugsweise außen an dem Innen- oder dem Außenring angeflanscht. Nach einer weiteren bevorzugten Ausführungsform der Erfindung ist auf der radial inneren Seite des Innenrings und/oder auf der radial äußeren Seite des Außenrings wenigstens ein Montagering angeordnet, in welchem wenigstens eine Bohrung zur Aufnahme des Zumessventils bzw. der Absaugeinrichtung vorgesehen sind.

Die erfindungsgemäße Lageranordnung kann Bestandteil einer Baumaschine oder einer Windkraftanlage sein. Es ist jedoch auch möglich, die erfindungsgemäße Lageranordnung mit als Einsatzpatrone ausgebildeten Einleitungsverteilern oder dgl. Zumeseventilen in Fahrzeugen oder Werkzeugen einzusetzen.

Nach einer Weiterbildung der Erfindung ist das Zumessentil zur Zudosierung von Schmierstoff an eine Schmlerstelle, Insbesondere an eine Lageranordnung, bspw. als Einleitungsverteiler ausgebildet, wobei das Zumessventil einen Schmierstoffeinlass und einen einer zu schmierenden Stelle zugewandten Schmierstoffauslass aufweist, zwischen denen in einer Hülse, die zusammen mit einer Einlasskappe als eine in eine Bohrung einsetzbare oder einschraubbare Einsatzpatrone ausgebildet ist, ein Dichtungskolben als Umsteuerventil und ein Förderkolben verschiebbar geführt sind. Zur Zudosierung von Schmierstoff weist dabei der Dichtungskolben eine umlaufende Dichtlippe auf, die ein Durchströmen eines Schmierstoffs in Förderrichtung erlaubt und ein Zurückströmen des Schmierstoffs verhindert, und zwischen einer einen Umsteuer- oder Druckentlastungskanal freigebenden und einer diesen sperrenden Stellung verschiebbar ist. Der Dichtungskolben kann durch eine Feder oder dergleichen elastisches Element in seine den Druckentlastungskanal sperrende Stellung beaufschlagt sein. Weiter ist der Förderkolben gegen die Kraft einer Feder oder eines anderen geeigneten elastischen Elements zur Förderung von Schmierstoff zu der zu schmierenden Stelle in Förderrichtung und zum Ansaugen von Schmierstoff durch die Kraft der Feder bzw. des elastischen Elements entgegen der Förderrichtung verschiebbar.

In der Druckphase, in welcher Schmierstoff durch den Schmierstoffeinlass zu dem Dichtungskolben geleitet wird, strömt der Schmierstoff an dem als Umsteuerventil wirkenden Dichtungskolben vorbei, der in seiner den Umsteuer - oder Druckentlastungskanal sperrende Stellung verschoben wird und dadurch den Umsteuer- oder Druckentlastungskanal hydraulisch von dem Einlassbereich trennt. Der an einer elastischen Dichtlippe des Dichtungskolbens vorbei strömende Schmierstoff beaufschlagt dabei den Förderkolben, welcher Schmierstoff gegen die Kraft der diesen beaufschlagenden Feder an die zu schmierende Stelle fördert.

In der Entlastungsphase, in welcher der Druck in der Hauptleitung abfällt und dadurch kein Schmierstoff durch den Schmierstoffeinlass zugeführt wird, drängt die den Förderkolben beaufschlagende Feder diesen entgegen der Förderrichtung zurück. Hierdurch wird der Dichtungskolben aus seiner den Umsteuer - oder Druckentlastungskanal sperrenden Stellung in seine den Druckentlastungskanal freigebende Stellung verschoben. Auf diese Weise kann Schmierstoff durch den Druckentlastungskanal von der Einlassseite des Förderkolbens zu der Auslassseite des Förderkolbens umgeschichtet werden, bis der Förderkolben seinen dem Schmierstoffeinlass zugewandten Anschlag erreicht. Die beiden Kolben des Zumessventils haben dann ihre Ausgangsstellung erreicht, um in einer erneuten Druckphase den auf der Auslassseite des Förderkolbens angeordneten Schmierstoff an die zu schmierende Stelle zu fördern.

Die Ausgestaltung des Zumessventils als Einsatzpatrone bedeutet im Sinne der vorliegenden Erfindung, dass diese derart ausgebildet ist, dass die Einsatzpatrone in eine Bohrung eines Bauteils integrierbar ist. Ein Verteiler (manifold) und/oder Befestigungsbohrungen sind daher nicht erforderlich.

Nach einer bevorzugten Ausführungsform der Erfindung ist es vorgesehen, dass der Einleitungsverteiler oder dgl. Zumessventil einen Adapter mit einem Außengewinde zum Fixieren der Einsatzpatrone in einer Gewindebohrung aufweist, wobei die Einsatzpatrone zumindest bereichsweise einen kleineren Außendurchmesser als der Adapter hat. Auf diese Weise lässt sich das als Einsatzpatrone ausgebildete Zumessventil leicht in eine Bohrung oder dergleichen einschieben und kann durch Einschrauben des Adapters befestigt werden. Alternativ kann die Einsatzpatrone selbst zumindest bereichsweise mit einem Außengewinde versehen sein, um unmittelbar auch ohne einen zusätzlichen Adapter in eine Gewindebohrung eingeschraubt zu werden.

In Weiterbildung dieses Erfindungsgedankens ist es vorgesehen, dass der Druckentlastungskanal zumindest abschnittsweise entlang der Außenfläche der Einsatzpatrone in einem aufgrund des gegenüber dem Adapter verringerten Außendurchmessers gebildeten Spalt verläuft. Der Aufbau der Einsatzpatrone wird auf diese Weise besonders einfach, da kein zusätzlicher Entlastungskanal vorgesehen ist, welcher an dem Förderkolben vorbei durch die Hülse führt. Vielmehr kann der Schmierstoff in der Entlastungsphase in einem spaltartigen Ringraum zwischen der Außenseite der Hülse und der Innenseite einer Bohrung oder dergleichen zu dem auslassseitigen Ende des Förderkolbens strömen. Alternativ oder zusätzlich hierzu ist es auch möglich, dass in der Außenwand der Hülse eine Nut oder dergleichen Vertiefung oder Abflachung ausgebildet ist, welche dann einen Teil des Druckentlastungskanals bildet. Wenn an der Einsatzpatrone O-Ringe oder dgl. Zentriermittel vorgesehen sind, kann eine definierte Breite des ringförmigen Spaltes erreicht werden, so dass der Spalt als Teil des Druckentlastungskanals nutzbar ist.

Vorzugsweise steht der Schmierstoffauslass des Zumessventils ohne Zwischenschaltung einer Schmierleitung in direkter Verbindung mit der zu schmierenden Stelle. Der durch die Ausbildung des Zumessventils als Einsatzpatrone ermöglichte Wegfall der Schmierleitung erhöht die Sicherheit, da bei Schmierleitungen teilweise die Gefahr besteht, dass diese aufgrund des hohen Gegendrucks platzen.

Nach einer bevorzugten Ausführungsform der Erfindung ist eine Kombination aus wenigstens einem Zumessventil zur Zudosierung von Schmierstoff an eine Schmierstelle und wenigstens einer Absaugeinrichtung vorgesehen. Dabei ist die Absaugeinrichtung mit einem einer zu schmierenden Stelle zugewandten Schmierstoffeinlass und einem Schmierstoffauslass versehen, zwischen denen in einer Hülse, die als eine in eine Bohrung einsetzbare oder einschraubbare Einsatzpatrone ausgebildet ist, ein Kolben derart verschiebbar geführt ist, dass der Kolben in einer ersten Bewegungsrichtung Schmierstoff aus dem Schmierstoffeinlass in die Hülse einsaugt und in einer zweiten, der ersten Bewegungsrichtung entgegengesetzten Bewegungsrichtung Schmierstoff durch den Schmierstoffauslass aus der Hülse fördert, wobei das Zumessventil und die Absaugeinrichtung über eine gemeinsame Schmierstoffversorgung zur Zufuhr von unter Druck stehendem Schmierstoff derart miteinander verbunden sind, dass der Kolben der Absaugeinrichtung durch den unter Druck stehenden Schmierstoff der Schmierstoffversorgung gegen die Kraft eines elastischen Elements in eine der beiden Bewegungsrichtungen und durch die Kraft des elastischen Elements in die andere der beiden Bewegungsrichtungen verschiebbar ist.

Die Absaugeinrichtung ist nach einer bevorzugten Ausführungsform derart ausgebildet, dass in der Hülse eine Zylinderbohrung vorgesehen ist, in welche der Schmierstoffeinlass, der Schmierstoffauslass und ein Anschluss für die Schmierstoffversorgung münden und in welcher der erste Kolben sowie ein weiterer Kolben derart verschiebbar geführt sind, dass der erste Kolben durch Druck des Schmierstoffs aus der Schmierstoffversorgung aus einer den Schmierstoffeinlass freigebenden Stellung in eine den Schmierstoffeinlass verschließende Stellung bewegbar ist, wobei der weitere Kolben durch den ersten Kolben aus einer den Schmierstoffauslass verschließenden Stellung in eine den Schmierstoffauslass freigebende Stellung bewegbar ist.

Die Erfindung wird nachfolgend anhand von Ausführungsbeispielen und unter Bezugnahme auf die Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: In Schnittansicht eine Lageranordnung mit einem Einleitungsverteiler,
- Fig. 2: in vergrößerter Schnittansicht den Einleitungsverteller nach Fig. 1 in der Druckphase,
- Fig. 3: in vergrößerter Schnittansicht den Einleitungsverteiler nach Fig. 1 in der Entlastungsphase
- Fig. 4: in Schnittansicht eine Absaugeinrichtung nach einer ersten Ausführungsform der Erfindung,
- Fig. 5: in Schnittansicht eine Absaugeinrichtung nach einer zweiten Ausführungsform der Erfindung,
- Fig. 6: in Schnittansicht eine Absaugeinrichtung nach einer dritten Ausführungsform der Erfindung,
- Fig. 7: in Perspektivansicht eine erfindungsgemäße Lageranordnung mit Einleitungsverteilern und Absaugeinrichtungen,
- Fig. 8: in Schnittansicht eine Lageranordnung nach einer vierten Ausführungsform der Erfindung mit zwei Einleitungsverteilern,
- Fig. 9: in Schnittansicht eine Lageranordnung nach einer fünften Ausführungsform der Erfindung mit einer Absaugeinrichtung,
- Fig. 10: in Schnittansicht eine Lageranordnung nach einer sechsten Ausführungsform der Erfindung mit zwei Einleitungsverteilern,
- Fig. 11a: in Perspektivansicht ein Einleitungsverteiler nach einer siebten Ausführungsform der Erfindung,
- Fig. 11b: in Perspektivansicht den Einleitungsverteiler nach Fig. 11a von der Rückseite her gesehen,
- Fig. 12a: in Perspektivansicht eine Absaugeinrichtung nach einer achten Ausführungsform der Erfindung,
- Fig. 12b: in Perspektivansicht die Absaugeinrichtung nach Fig. 12a gesehen von der Rückseite,
- Fig. 13: in Perspektivansicht eine Absaugeinrichtung nach einer neunten Ausführungsform der Erfindung,
- Fig. 14: in Perspektivansicht eine Absaugeinrichtung nach einer weiteren Ausführungsform der Erfindung und
- Fig. 15a - e: in Schnittansicht eine Absaugeinrichtung nach einer weiteren Ausführungsform der Erfindung.

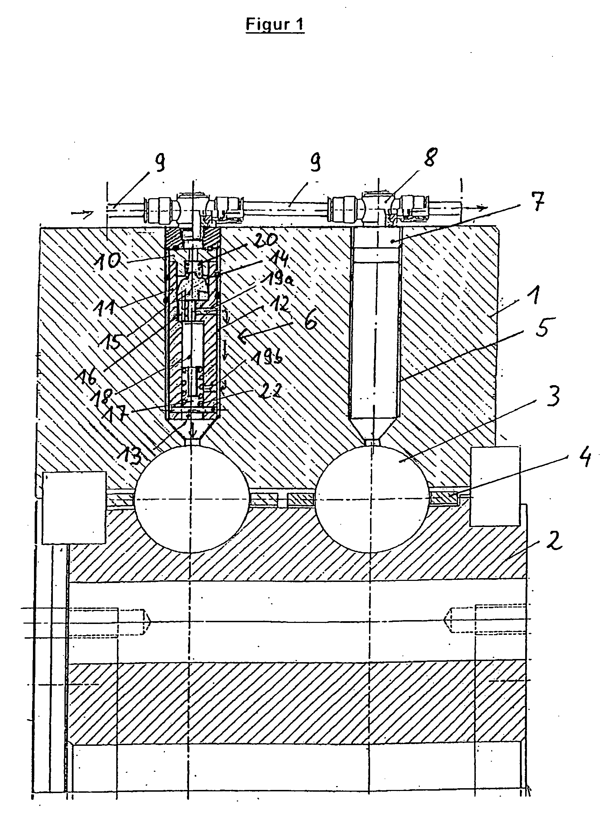

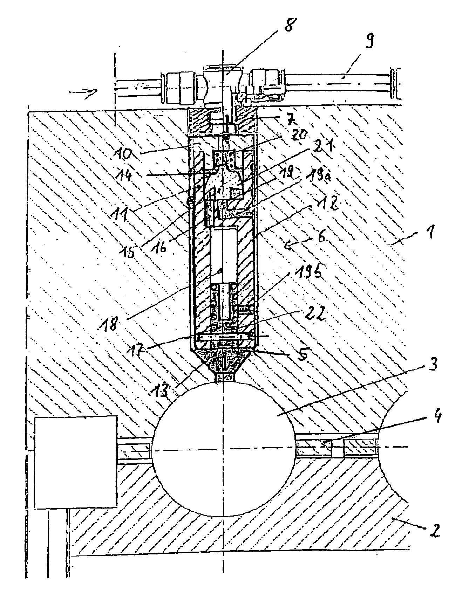

In den Figuren 1 bis 3 und 7 ist eine Lageranordnung, wie sie beispielsweise für Windkraftanlagen oder große Baumaschinen eingesetzt werden kann, durch einen Außenring 1 und einen Innenring 2 angedeutet, zwischen denen Kugeln 3 in Laufbahnen vorgesehen sind, so dass der Außenring 1 relativ zu dem Innenring 2 verdrehbar ist. Bei der in Figur 1 dargestellten zweireihigen Lageranordnung sind die Kugeln 3 in jeweils einem Käfig 4 geführt.

Durch den Außenring 1 der Lageranordnung erstrecken sich in radialer Richtung mehrere Bohrungen 5, welche in die Laufbahnen der Kugeln 3 münden. In der in der Figur 1 linken Bohrung 5 ist ein in der dargestellten Ausführungsform als Einleitungsverteiler (Injektor) 6 ausgebildetes Zumessventil vorgesehen, welcher als Einsatzpatrone in die Bohrung 5 eingeschoben ist. Auf der in den Figuren oberen, außen liegende Seite ist jede der Bohrungen durch einen Adapter 7 verschlossen, welcher in einem Gewindeabschnitt der Bohrung 5 eingeschraubt ist, und hierdurch den als Einsatzpatrone ausgebildeten Einleitungsverteiler 6 fixiert. Weiter ist der Adapter 7 mit einem T-Stück 8 verbunden, welches an Leitungen 9 zur Zufuhr von Schmierstoff aus einem nicht dargestellten Schmierstoffvorratsbehälter angeschlossen ist.

Der Einleitungsverteiler 6 ist im Wesentlichen durch eine Einlasskappe 10 und eine Hülse 11 gebildet, welche zusammen die Einsatzpatrone bilden. Der Außendurchmesser der Einsatzpatrone ist dabei kleiner als der Außendurchmesser des Adapters 7, so dass sich die Einsatzpatrone leicht in die Bohrung 5 einführen lässt. Gleichzeitig wird zwischen der Innenwand der Bohrung 5 und der Außenwand der Einsatzpatrone 6. ein ringförmiger Spalt 12 definiert. Durch O-Ringe 23 wird das Zumessventil einerseits in der Bohrung 5 abgedichtet und andererseits auch zentriert geführt. Die O-Ringe 23 bewirken also eine weitgehend konstante Breite des ringförmigen Spalts 12.

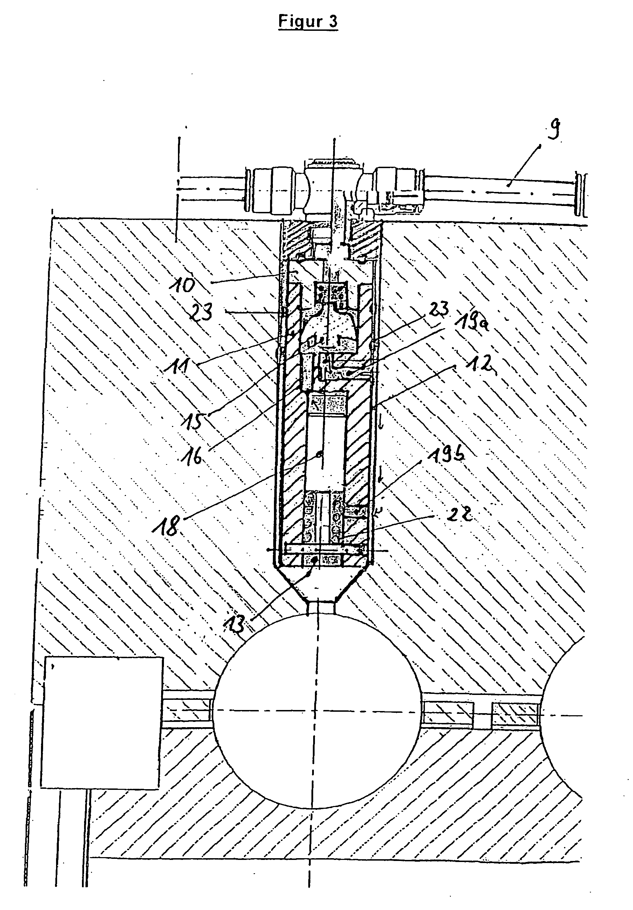

Der durch die zentralen Öffnungen im Adapter 7 und der Einlasskappe 10 definierte Schmierstoffeinlass steht mit dem den zu schmierenden Wälzkörpern 3 zugewandten Schmierstoffauslass 13 durch zwei Kanäle in Verbindung. Wie auch aus der vergrößerten Darstellung der Figuren 2 und 3 ersichtlich ist, mündet der Schmierstoffeinlass zunächst in einen oberen Zylinderraum 14, in welchem ein als Umsteuerventil arbeitender Dichtungskolben 15 verschiebbar geführt ist. Aus dem oberen Zylinderraum 14 führt ein axialer Kanal 16 in einen in den Figuren unteren Zylinderraum 17, der in den Schmierstoffauslass 13 mündet. In dem unteren Zylinderraum 17 ist ein Förderkolben 18 verschiebbar geführt. Zusätzlich zweigt aus dem oberen Zylinderraum 14 ein Umsteuer- oder Druckentlastungskanal 19 ab, welcher einen in den Figuren oberen Abschnitt 19a, der von dem oberen Zylinderraum 14 in den ringförmigen Spalt 12 zwischen der Bohrung 5 und dem Einleitungsverteiler mündet, sowie einen unteren Abschnitt 19b aufweist, welcher aus dem Spalt 12 in den unteren Zylinderraum 17 mündet.

Der Dichtungskolben 15 wird durch eine Feder 20 in der Figur nach unten beaufschlagt, so dass der Dichtungskolben 15 gegen den oberen Abschnitt 19a des Druckentlastungskanals gedrückt wird und diesen absperrt. Weiter ist der Dichtungskolben 15 mit einer umlaufenden Dichtlippe 21 versehen, welche eine Strömung eines Schmierstoffes in dem oberen Zylinderraum 14 in Förderrichtung, das heißt in der Figur nach unten, erlaubt, ein Zurückströmen des Schmierstoffs in entgegengesetzter Richtung jedoch verhindert. Der Förderkolben 18 ist in dem unteren Zylinderraum 17 abgedichtet geführt, so dass Schmierstoff nicht durch den unteren Zylinderraum 17 an dem Förderkolben 18 vorbei strömen kann. Eine Feder 22 drückt den Förderkolben 18 entgegen der Förderrichtung des Schmierstoffes in den Figuren nach oben.

Wird nun in der in Figur 2 dargestellten Druckphase Schmierstoff durch die Leitung 9 und das T-Stück 8 in den Schmierstoffeinlass der Einsatzpatrone gedrückt, so wird der Dichtungskolben 15 fest gegen den oberen Abschnitt 19a des Druckentlastungskanal gepresst und schließt diesen ab. Gleichzeitig kann der Schmierstoff an der Dichtlippe 21 vorbei fließen, welche sich durch den Druck des Schmierstoffs verformt. Der Schmierstoff gelangt über den axialen Kanal 16 in den unteren Zylinderraum 17 und bewegt den Förderkolben 18 gegen den Druck der Feder 22 in Förderrichtung. Hierdurch wird im unteren Bereich des unteren Zylinderraums 17 aufgenommener Schmierstoff durch den Schmierstoffauslass 13 zu der zu schmierenden Stelle gefördert.

In der in Figur 3 gezeigten Druckentlastungsphase wird kein weiterer Schmierstoff über die Leitung 9 zugeführt. Der Dichtungskolben 15 wird alleine durch die Kraft der Feder 22 gegen den oberen Abschnitt 19a des Druckentlastungskanals angelegt. Die durch die Druckphase komprimierte Feder 22 ist dagegen so ausgelegt, dass in der Entlastungsphase der Förderkolben 18 in der Figur nach oben verschoben werden kann. Hierdurch wird der oberhalb des Förderkolbens 18 in dem unteren Zylinderraum 17 aufgenommene Schmierstoff durch den axialen Kanal 16 in den oberen Zylinderraum 14 gedrängt. Der Schmierstoff kann jedoch die Dichtlippe 21 des Dichtkolbens 15 nicht passieren und hebt diesen gegen die Kraft der Feder 20 von dem oberen Abschnitt 19a des Druckentlastungskanals ab. Der Schmierstoff kann somit durch den oberen Abschnitt 19a des Druckentlastungskanals in den ringförmigen Spalt 12 strömen und von diesem über den unteren Abschnitt 19b des Druckentlastungskanals auf die in der Figur untere Seite des unteren Zylinderraums 17 fließen.

Wenn der Förderkolben 18 seine in Figur 2 gezeigte obere Endstellung erreicht hat, kann in einer erneuten Druckphase der Schmierstoff aus dem unteren Bereich des unteren Zylinderraums 17 von dem Förderkolben zu dem Schmierstoffauslass 13 gefördert werden.

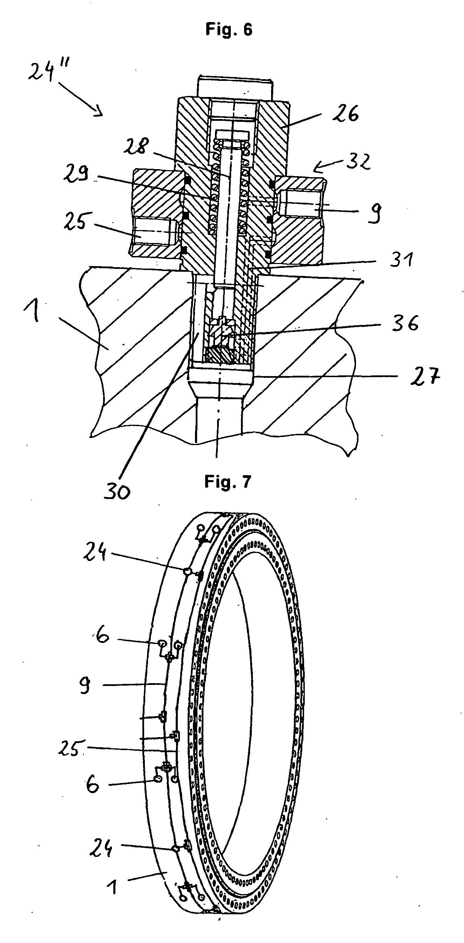

Um den von, dem Einleitungsverteiler 6 in der Lageranordnung eingebrachten Schmierstoff aufzunehmen und zu einem Sammelbehälter (nicht dargestellt) zu leiten, können, wie in Figur 7 dargestellt, Absaugeinrichtungen 24 vorgesehen sein. Figur 7 zeigt dabei eine zweireihige Lageranordnung, wobei jeder Reihe von Wälzkörpern jeweils mehrere Einleitungsverteiler 6 zugeordnet sind, die über eine gemeinsame Leitung 9 mit einer Pumpe (nicht dargestellt) zur Zufuhr von unter Druck stehendem Schmierstoff verbunden sind. In dem Zwischenraum zwischen den Reihen von Wälzkörpern der Lageranordnung sind in Figur 7 Absaugeinrichtungen 24 dargestellt, wobei in Umfangsrichtung zwischen zwei Paaren von Einleitungsverteilern 6 jeweils eine Absaugeinrichtung 24 angeordnet ist. Wie unten näher beschrieben wird, sind auch die Absaugeinrichtungen 24 mit der Leitung 9 verbunden. Weiter sind die Absaugeinrichtungen 24 über eine Rückführleitung 25 miteinander verbunden, die zu einem in der Figur nicht gezeigten Schmierstoffsammelbehälter führt. Aus diesem kann der Schmierstoff gegebenenfalls über eine Pumpe wieder in die Leitung 9 gefördert werden.

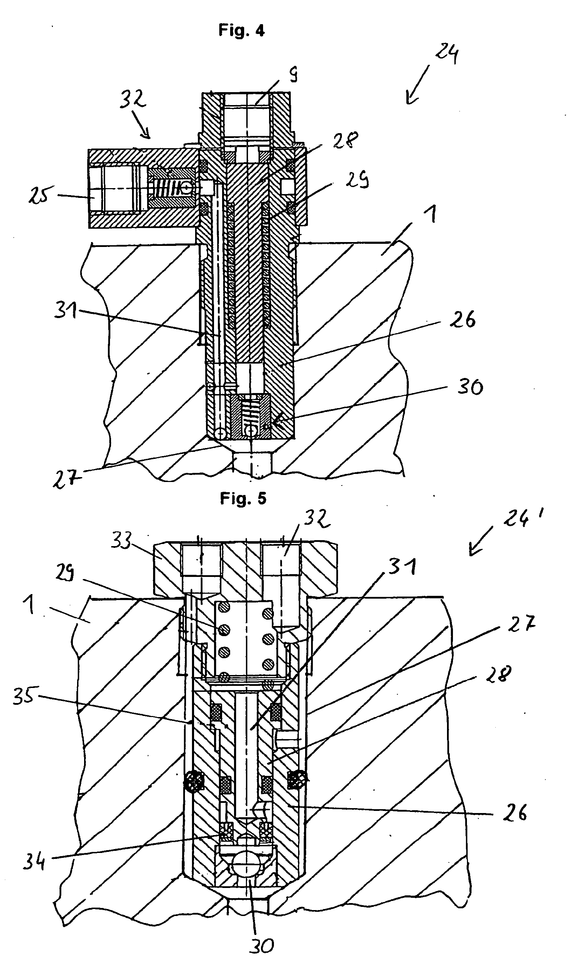

In Figur 4 ist eine erste Ausführungsform einer Absaugeinrichtung 24 im Detail dargestellt. Die Absaugeinrichtung 24 ist im Wesentlichen durch eine Hülse 26 gebildet, welche in eine weitere Bohrung 27 in der Lageranordnung als eine Einsatzpatrone eingeschraubt ist. In der Hülse 26 ist ein Kolben 28 verschiebbar angeordnet, welcher durch eine Feder 29 in der Figur nach oben beaufschlagt wird.

Auf der in Figur 4 oberen Seite der Hülse 26 ist ein Anschluss vorgesehen, um die Absaugeinrichtung 24 mit der Leitung 9 zu verbinden. Auf der gegenüberliegenden, unteren Seite ist eine Schmierstoffeinlass 30 zum Ansaugen von Schmierstoff aus der Lageranordnung vorgesehen, welche in der dargestellten Ausführungsform durch ein Rückschlagventil gebildet ist. In der Hülse 26 ist ein Auslasskanal 31 vorgesehen, welcher mit dem Innenraum der Hülse 26, in welchem der Kolben 28 verschiebbar ist, in Strömungsverbindung steht. Der Auslasskanal 31 mündet in einen Schmierstoffauslass 32, welcher in der dargestellten Ausführungsform ebenfalls durch ein Rückschlagventil gebildet ist. Der Schmierstoffauslass 32 steht mit der Rückführleitung 25 in Strömungsverbindung.

Wenn die Leitung 9 mit Druck beaufschlagt wird, strömt Schmierstoff in die Hülse 26 der Absaugeinrichtung 24 und drängt den Kolben 28 gegen die Kraft der Feder 29 in der Figur nach unten. Hierdurch wird Schmierstoff aus dem Innenraum der Hülse 26 durch den Auslasskanal 31 und den Schmierstoffauslass 32 in die Rückführleitung 25 gefördert, wobei das Rückschlagventil des Schmierstoffauslasses 32 öffnet und das Rückschlagventil des Schmierstoffeinlasses 30 schließt.

Wird die Leitung 9 wieder entlastet, drängt die Feder 29 den Kolben 28 in der Figur nach oben, so dass im Innenraum der Hülse 26 ein Unterdruck entsteht. Das Rückschlagventil des Schmierstoffauslasses 32 schließt sich und das Rückschlagventil des Einlasses 30 öffnet sich und saugt Schmierstoff aus der Lageranordnung an. Auf diese Weise kann Schmierstoff aus der Lageranordnung beispielsweise in einen Sammelbehälter gefördert werden, aus welchem Schmierstoff wieder über Einleitungsverteiler 6 der Lageranordnung zugeführt werden kann.

In Figur 5 ist eine zweite Ausführungsform einer Absaugeinrichtung 24' dargestellt, welche wiederum durch eine Hülse 26 gebildet ist, welche in einer Bohrung 27 der Lageranordnung eingesteckt ist. In der Hülse 26 ist ein Kolben 28 verschiebbar geführt, welcher als ein Differenzialkolben ausgebildet ist und durch eine Feder 29 in der Figur nach unten beaufschlagt wird. Die Hülse 26 ist durch einen in die Bohrung 27 eingeschraubten Adapter 33 in der Lageranordnung fixiert.

Der Kolben 28 weist eine als Auslasskanal 31 dienende zentrale Bohrung auf, welche mit dem in dem Adapter 33 vorgesehenen Schmierstoffauslass 32 in Verbindung steht. Eine direkte Strömungsverbindung zwischen dem durch ein Rückschlagventil gebildeten Schmierstoffeinlass 30 an dem in der Figur unteren Ende der Hülse 26 und dem Auslasskanal 31 in dem Kolben 28 wird im unbelasteten Zustand durch einen Nutring 34 an dem in der Figur unteren Ende des Kolbens 28 gesperrt. Auf der in Figur 5 linken Seite des Adapters 33 ist ein Anschluss zur Verbindung mit der Leitung 9 vorgesehen, so dass unter Druck stehender Schmierstoff aus der Leitung 9 in einen ringförmigen Spalt 35 zwischen der Bohrung 27 und der Außenfläche der Hülse 26 strömen kann. Durch eine Querbohrung in der Hülse 26 kann der Schmierstoff nach innen fließen und dadurch den Kolben 28 gegen die Kraft der Feder 29 in der Figur nach oben drücken. Hierdurch wird das Rückschlagventil des Schmierstoffeinlasses 30 geöffnet und Schmierstoff wird aus der Lageranordnung in das Innere der Hülse 26 gesaugt. Durch den dichtend an der Innenwand der Hülse 26 anliegenden Nutring 34 wird erreicht, dass der im Inneren des Kolbens 28 aufgenommene Schmierstoff durch den Schmierstoffauslass 32 in die Rückführleitung 25 gefördert wird.

Fällt der Druck in der Leitung 9 ab, wird der Kolben 28 durch die Feder 29 in der Figur nach unten gedrückt. Hierbei schließt das Rückschlagventil des Schmierstoffeinlasses 30, wobei Schmierstoff an dem Nutring 34 vorbei in die Bohrung 31 in dem Kolben 28 strömen kann. In der in der Figur 5 gezeigten Stellung des Kolbens 28 kann dann wieder ein neuer Zyklus zum Absaugen von Schmierstoff beginnen, indem die Leitung 9 mit Druck beaufschlagt wird.

In Figur 6 ist eine weitere Ausführungsform einer Absaugeinrichtung 24" dargestellt. Ähnlich wie bei den zuvor beschriebenen Ausführungsformen ist wiederum eine Hülse 26 in geeigneter Weise in eine Bohrung 27 in der Lageranordnung eingesetzt und befestigt. Im Innenraum der Hülse 26 ist ein Kolben 28 verschiebbar geführt, der durch eine Feder 29 in der Figur nach oben beaufschlagt wird. Durch einen mit der Leitung 9 verbindbaren Anschluss kann dem in der Figur oberen Bereich der Hülse 26 unter Druck stehender Schmierstoff zugeführt werden, so dass der Kolben 28 gegen die Kraft der Feder 29 nach unten verschoben werden kann.

Der untere Bereich des Innenraums der Hülse 26 ist über ein Rückschlagventil 36 gegenüber einem in der Wand der Hülse 26 verlaufenden Auslasskanal 31 abgedichtet, welcher in der Figur 6 gestrichelt dargestellt ist und in einen Schmierstoffauslass 32 mündet. Weiter ist bei der in Figur 6 dargestellten Ausführungsform auf der linken Seite der Hülse 26 ein Bypasskanal ausgebildet, welcher den Schmierstoffeinlass 30 bildet und über eine Querbohrung mit dem Innenraum der Hülse 26 verbunden ist.

Wenn der Kolben 28 durch den Druck des Schmierstoffes in der Figur nach unten bewegt wird, wird die Querbohrung des Schmierstoffeinlasses 30 von dem Kolben 28 verschlossen, so dass im unteren Bereich der Hülse 26 aufgenommener Schmierstoff komprimiert wird. Hierdurch öffnet sich das Rückschlagventil 36 und der Schmierstoff kann dann über den Auslasskanal 31 zu dem Schmierstoffauslass 32 und in die Rückführleitung 25 gefördert werden.

Wenn der Druck in der Leitung 9 abfällt, wird der Kolben 28 durch die Kraft der Feder 29 in der Figur wieder nach oben geschoben. Das Rückschlagventil 36 schließt sich durch den in der Hülse 26 entstehenden Unterdruck wieder und sobald der Kolben 28 die Querbohrung des Schmierstoffeinlasses 30 passiert, wird Schmierstoff aus der Lageranordnung in den Innenraum der Hülse 26 angesaugt. Es kann dann ein neuer Zyklus zum Absaugen und Ausbringen von Schmierstoff aus der Lageranordnung beginnen.

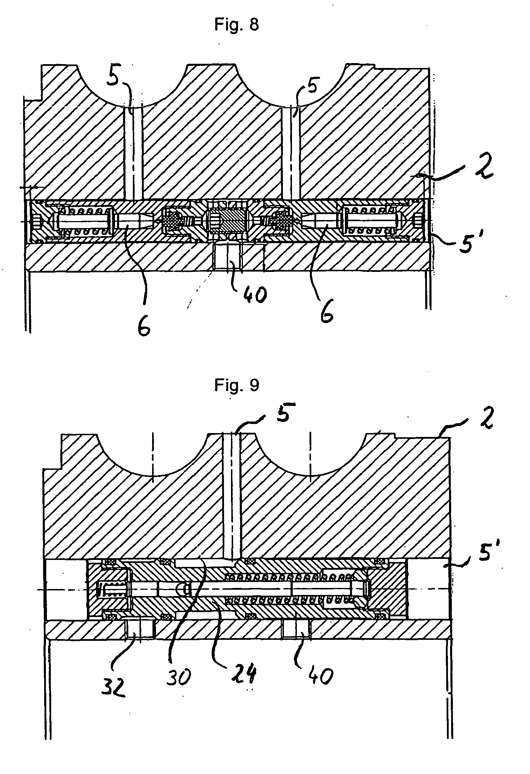

In Fig. 8 ist eine weitere Ausführungsform der Erfindung dargestellt, bei welcher wie oben unter Bezugnahme auf Fig. 1 beschrieben, radiale Bohrungen 5 vorgesehen sind, welche in die Laufbahnen der Kugeln münden, während eine weitere Bohrung 5', die sich in axialer Richtung der Lageranordnung erstreckt, in dem Innenring 2 vorgesehen ist. In der weiteren Bohrung 5' sind zwei Einleitungsverteiler (Injektoren) 6 derart miteinander gekoppelt vorgesehen, dass jeder Einleitungsverteiler über seinen Schmierstoffauslass 13 mit der jeweiligen radialen Bohrung 5 verbunden ist, während ein gemeinsamer Schmierstoffeinlass für beide Einleitungsverteiler 6 auf der radial inneren Seite des Innenrings 2 vorgesehen ist. Die Schmierstoffzufuhr kann somit über eine Hohlwelle oder dergleichen erfolgen.

Bei dieser Ausführungsform lassen sich zwei Einleitungsverteiler 6 auch bei sehr geringem radialen Bauraum in den Innenring 2 eines Lagers vorsehen. In gleicher Weise ist es möglich, eine axiale Bohrung 5' zusätzlich oder alternativ zu der Bohrung 5' in dem Innenring 2 auch in dem Außenring 1 vorzusehen.

In Fig. 9 ist eine zu Fig. 8 ähnliche Ausführungsform gezeigt, wobei in einer axial verlaufenden Bohrung 5' in dem Innenring 2 eine Absaugeinrichtung 24 untergebracht ist, deren Schmierstoffeinlass 30 mit einer Bohrung 27 in Verbindung steht, die in den Spalt zwischen den Laufbahnen der Wälzkörper der Lageranordnung führt. Die Absaugeinrichtung 24 weist wie oben unter Bezugnahme auf die Fig. 4 bis 6 erläutert, einen mit einer Sammelleitung verbindbaren Schmierstoffauslass 32 sowie einen Anschluss zur Verbindung mit der Leitung 9 (in der Figur nicht gezeigt) zur Zufuhr von mit Druck beaufschlagbarem frischen Schmierstoff auf.

Wie oben unter Bezugnahme auf Fig. 8 bereits erläutert, ist es alternativ zu der in Fig. 9 gezeigten Ausführungsform auch möglich, die axial verlaufende Bohrung 5' in dem Außenring 1 statt in dem Innenring 2 vorzusehen. Weiter werden auch Ausführungsformen als vorteilhaft erachtet, bei welchen sowohl in dem Außenring 1 als auch in dem Innenring 2 axiale Bohrungen 5' vorgesehen sind.

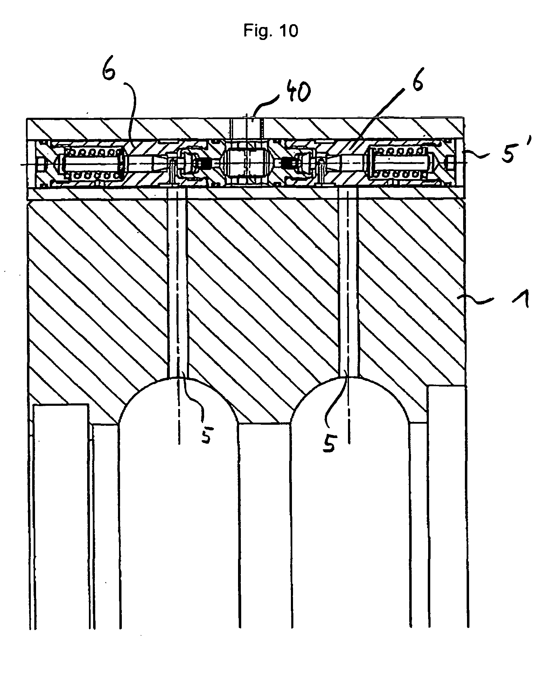

In Fig. 10 ist eine weitere Ausführungsform der Erfindung dargestellt, bei welcher in dem Außenring 1 radiale Bohrungen 5 vorgesehen sind, die in die Laufbahnen der Kugeln 3 der Lageranordnung münden. In diesen Bohrungen 5 sind jedoch weder Injektoren noch Absaugeinrichtungen angeordnet. Auf der Außenseite des Außenrings 1 ist ein Montagering 37 vorgesehen, der radiale Bohrungen aufweist, die mit den Bohrungen 5 in dem Außenring 1 in Überdeckung gebracht werden können. Der Montagering 37 ist weiter mit einer axial verlaufenden Bohrung 5' versehen, so dass wie oben unter Bezugnahme auf Fig. 8 erläutert, zwei Einleitungsverteiler 6 in dem Montagering 37 ohne nennenswerte Vergrößerung des radialen Bauraums aufgenommen werden können. Auf diese Weise lassen sich auch bestehende Lager mit minimalem Aufwand mit einer Schmierstoffversorgung nachrüsten. Wie oben erläutert, können statt den in der Ausführungsform nach Fig. 10 gezeigten zwei Einleitungsverteilern 6 in der axialen Bohrung 5' auch nur ein einzelner Einleitungsverteiler 6 und/oder eine Absaugeinrichtung 24 vorgesehen sein. Weiter ist es möglich, einen Montagering 37 statt an der Außenseite des Außenrings 1 an der Innenseite des Innenrings 2 vorzusehen.

Gegenstand der Erfindung ist unabhängig von den zuvor beschriebenen Ausführungsformen auch eine Lageranordnung, bei welcher separate Gehäuse zur Aufnahme von wenigstens einem Einleitungsverteiler 6 (Injektor) und/oder einer Absaugeinrichtung 24 vorgesehen sind. Alternativ zu der zuvor beschriebenen Ausführungsform mit wenigstens einem Montagering 37 kann das an einer Stirnseite des Außenrings 1 und/oder des Innenrings 2 vorgesehen sein. Bei entsprechender Ausgestaltung des Gehäuses kann dieses ggf. auch alternativ zu dem Montagering 37 an der Außenfläche des Außenrings 1 bzw. an der Innenfläche des Innenrings 2 vorgesehen werden.

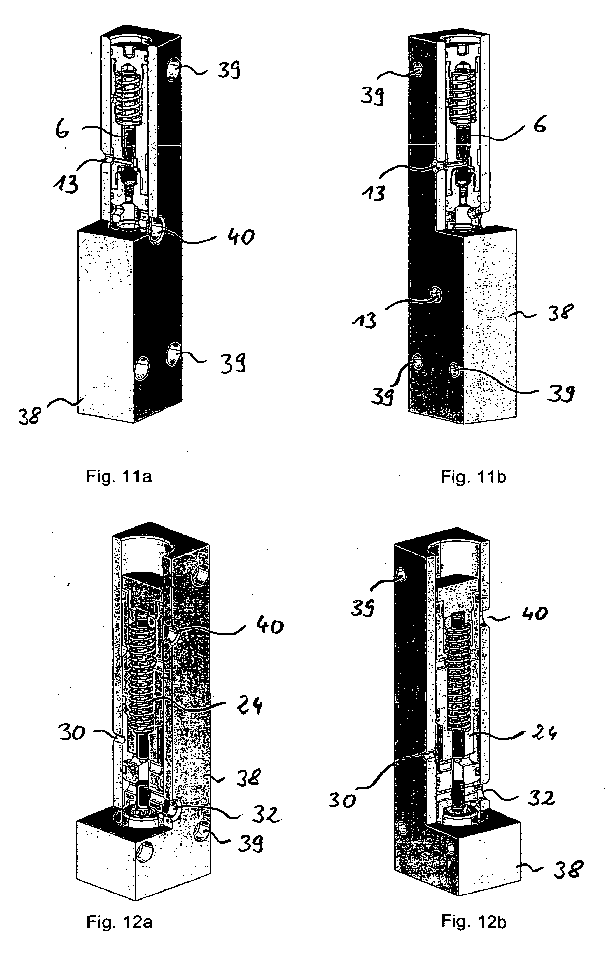

Unter Bezugnahme auf die Fig. 11a und 11b wird eine weitere Ausführungsform der Erfindung beschrieben, bei welcher zwei miteinander gekoppelte Einleitungsverteiler 6 (Injektoren) in einem gemeinsamen Gehäuse 38 derart angeordnet sind, dass sie über einen gemeinsamen Anschluss mit der Leitung 9 (nicht gezeigt) verbindbar sind. Das Gehäuse 38 kann an der Lageranordnung in der Art einer Flanschverbindung festgeschraubt werden. Hierzu sind mehrere. Befestigungsbohrungen 39 in dem Gehäuse vorgesehen. Wie in Fig. 11a gezeigt, ist auf der der Lageranordnung abgewandten Seite ein Einlass 40 zur Verbindung mit der Schmierstoffleitung 9 vorgesehen, der beide Einleitungsverteiler 6 mit frischem Schmierstoff versorgt. Auf der der Lageranordnung zugewandten gegenüberliegenden Seite ist, wie in Fig. 11b dargestellt, für jeden Einleitungsverteiler 6 ein Schmierstoffauslass 13 vorgesehen, der mit Bohrungen 5 oder 5' derart verbindbar ist, dass frischer Schmierstoff den Laufbahnen der Kugeln der Lageranordnung zugeführt werden kann. Die Einleitungsverteiler 6 können als Einsatzpatrone in dem Gehäuse 38 aufgenommen sein, um bei Bedarf rasch ausgetauscht werden zu können.

In den Fig. 12a und 12b ist eine der Ausführungsform nach den Fig. 11a und 11b ähnliche Ausführungsform dargestellt, wobei in dem quaderförmigen Gehäuse 38 eine Absaugeinrichtung 24 aufgenommen ist. Auf der Lageranordnung abgewandten Seite des Gehäuses 38 sind dabei der Anschluss 40 für die Zufuhr von frischem Schmierstoff sowie der Schmierstoffauslass 32 zum Anschluss an eine Sammelleitung vorgesehen. Dagegen ist auf der der Lageranordnung zugewandten Seite des Gehäuses 38 ein Schmierstoffeinlass 30 angeordnet, der mit einer entsprechenden Bohrung zum Absaugen von altem Schmierstoff aus der Lageranordnung verbunden werden kann. Auch die Absaugeinrichtung 24 ist als eine Einsatzpatrone in dem Gehäuse 38 austauschbar aufgenommen.

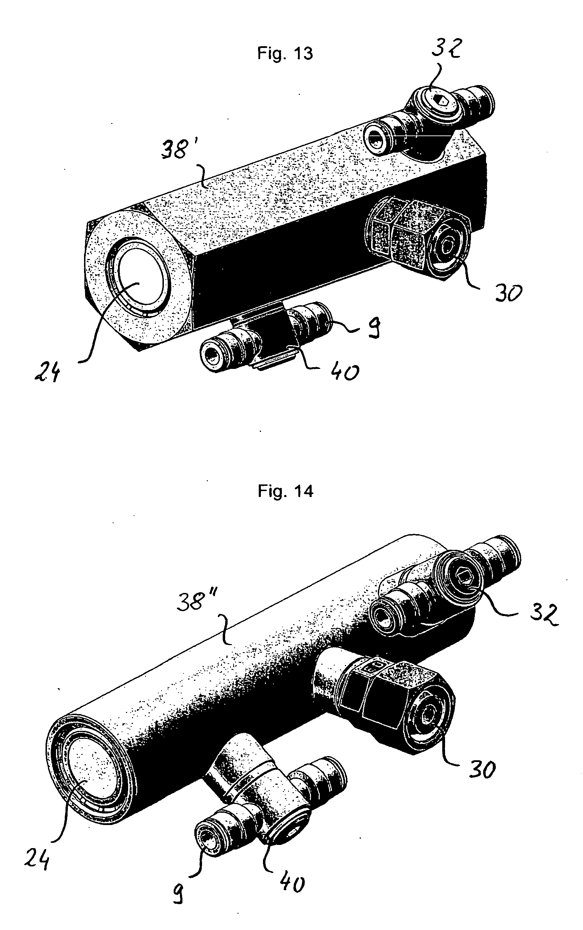

In den Fig. 13 und 14 sind weitere Ausführungsformen von separaten Gehäusen 38' bzw. 38" dargestellt, die zur Aufnahme einer im Detail nicht dargestellten Absaugeinrichtung 24 oder alternativ zur Aufnahme von Einleitungsverteilern 6 (in den Figuren nicht dargestellt) vorgesehen sind. Das in der Ausführungsform nach Fig. 13 beispielsweise aus Aluminium hergestellte Gehäuse 38' weist eine im Querschnitt sechseckige Außenkontur und eine zentrale innere Bohrung zur Aufnahme der Absaugeinrichtung 24 auf. An der Außenseite des Gehäuses 8 sind ein Schmierstoffeinlass 30 zur Verbindung mit einer zu der Lageranordnung führenden Absaugleitung, ein Schmierstoffauslass 32, der über ein T-Stück den abgesaugten Schmierstoff an eine Sammelleitung abgibt, sowie ein Anschluss 40 auf, der ebenfalls als ein T-Stück zum Anschluss an die Leitung 9 zur Versorgung mit frischem Schmierstoff zum Antrieb der Absaugeinrichtung 24 ausgebildet ist.

In der Ausführungsform nach Fig. 14 ist das Gehäuse 38" beispielsweise als ein Stahlrohr mit aufgelöteten Anschlussstutzen ausgebildet. Im Inneren des Gehäuses 38" ist eine nicht näher dargestellte Absaugeinrichtung 24 aufgenommen. Alternativ hierzu können auch Einleitungsverteiler 6 in dem Gehäuse 38" vorgesehen sein. Wie oben unter Bezugnahme auf die Fig. 13 erläutert, sind auch bei der Ausführungsform nach Fig. 14 die Anschlussstutzen als ein Schmierstoffeinlass 30, ein Schmierstoffauslass 32 sowie ein Anschluss 40 für die Leitung 9 ausgebildet.

Bei den Ausführungsformen nach den Fig. 13 und 14 kann eine Absaugeinrichtung 24 oder ein Injektor auch extern an einer Lagerstelle angebracht werden, wenn der Einbau in eine Lagereinheit aus Platzgründen nicht möglich ist oder der Aufwand zur Integration in ein Lager zu hoch ist. Die Befestigung der Gehäuse 38' oder 38" kann ebenfalls über eine Verschraubung erfolgen. Alternativ oder zusätzlich ist es bei im Betrieb auftretenden starken Schwingungen auch möglich, zusätzliche Befestigungsmöglichkeiten, wie beispielsweise Schellen, vorzusehen.

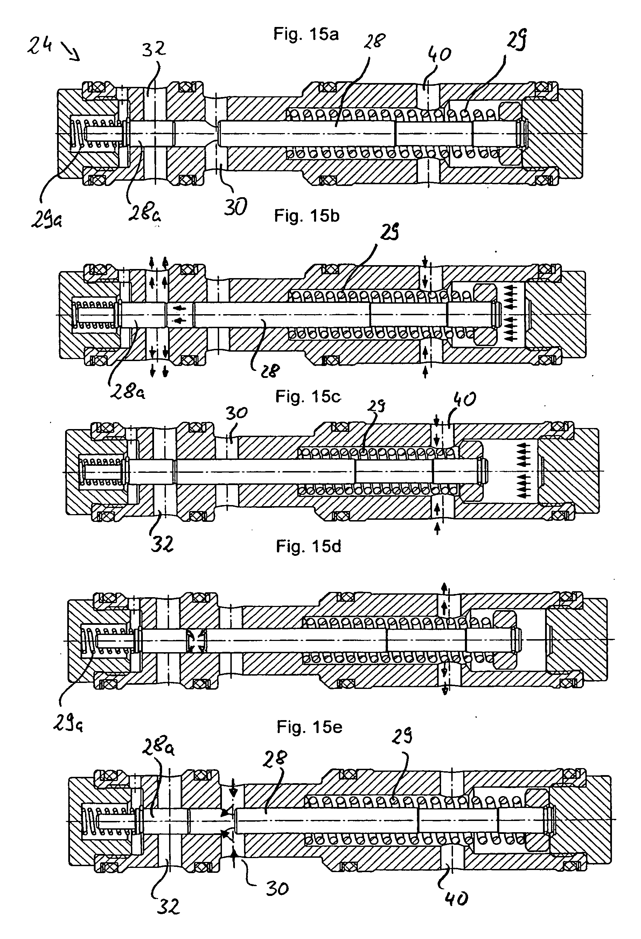

Die Funktionsweise einer Absaugeinrichtung 24 nach einer bevorzugten Ausführungsform der Erfindung wird nachfolgend unter Bezugnahme auf die Fig. 15a bis 15e erläutert. In der Ruheposition nach Fig. 15a ist die Hauptleitung entlastet, so dass der Kolben 28 mit einer in der Figur rechts an dem Kolben 28 dargestellten Scheibe durch die Feder 29 in ihre Ausgangslage gedrückt werden. Ein weiterer Kolben 28a wird durch eine weitere Feder 29a ebenfalls in seine Ausgangsstellung gedrängt, in der der Schmierstoffauslass 32 verschlossen ist. Die die Federn 29, 29a aufnehmenden Kammern sind hierbei bereits aus dem vorherigen Arbeitstakt mit Schmierstoff befüllt. Wenn, wie in Fig. 15b angedeutet, die Hauptleitung 9 mit Druck (bspw. 37 bar) beaufschlagt wird, tritt Fluid in die Kammer der Feder 29 ein und schiebt die Scheibe und den Kolben 28 gegen die Kraft der Feder nach links. Der Kolben 28 schließt hierdurch den Schmierstoffeinlass 30. Der zwischen den Kolben 28 und 28a vorhandene Schmierstoff verschiebt durch die Bewegung des Kolbens 28 den Kolben 28a, so dass dieser den Schmierstoffauslass 32 freigibt und alter Schmierstoff austreten kann. Dieser Vorgang ist beendet, wenn der Druck in der Hauptleitung 9 weiter ansteigt (bspw. auf 80 bar), bis die Scheibe wie in Fig. 15c gezeigt gegen einen Anschlag des Gehäuses stößt. Die Kolben 28 und 28a berühren sich hierbei.

Nach der Entlastung der Hauptleitung 9 drängen die Federn 29 und 29a die Kolben 28 und 28a zurück (in Fig. 15d nach rechts). Hierbei wird frischer Schmierstoff in die Leitung 9 zurückgeführt. Kolben 28a wirkt dabei als ein Rückschlagventil, wobei zunächst zwischen den Kolben 28 und 28a ein Vakuum erzeugt wird. Sobald der Kolben 28 so weit zurückgeschoben ist, dass der Schmierstoffeinlass 30 geöffnet wird, saugt der Unterdruck verbrauchten Schmierstoff aus einem Lager (nicht gezeigt) in den Schmierstoffeinlass 30 ein. Die Absaugeinrichtung ist damit wieder einsatzfähig für den nächsten Arbeitstakt.

### Bezugszeichenliste:

- 1: Außenring
- 2: Innenring
- 3: Kugel
- 4: Käfig
- 5, 5': Bohrung
- 6: Einleitungsverteiler (Injektor)
- 7: Adapter
- 8: T-Stück
- 9: Leitung
- 10: Einlasskappe
- 11: Hülse
- 12: ringförmiger Spalt
- 13: Schmierstoffauslass
- 14: oberer Zylinderraum
- 15: Dichtungskolben
- 16: axialer Kanal
- 17: unterer Zylinderraum
- 18: Förderkolben
- 19: Druckentlastungskanal
- 19a: oberer Abschnitt des Druckentlastungskanals 19
- 19b: unterer Abschnitt des Druckentlastungskanals 19
- 20: Feder
- 21: Dichtlippe
- 22: Feder
- 23: O-Ring
- 24, 24', 24": Absaugeinrichtung
- 25: Rückführleitung
- 26: Hülse
- 27: Bohrung
- 28, 28a: Kolben
- 29, 29a: Feder
- 30: Schmierstoffeinlass
- 31: Auslasskanal
- 32: Schmierstoffauslass
- 33: Adapter
- 34: Nutring
- 35: ringförmiger Spalt
- 36: Rückschlagventil
- 37: Montagering
- 38, 38', 38": Gehäuse
- 39: Befestigungsbohrung
- 40: Anschluss für Leitung 9

## Patentansprüche

1. Lageranordnung mit einem Außenring (1) und einem Innenring (2), welche relativ zueinander verdrehbar sind, und mit Wälzkörpern, insbesondere Kugeln (3), welche zwischen dem Außenring (1) und dem Innenring (2) angeordnet sind, wobei in dem Außenring (1) und/oder in dem Innenring (2) wenigstens eine vorzugsweise radial verlaufende Bohrung (5) vorgesehen ist, **dadurch gekennzeichnet, dass** die Bohrung (5) mit wenigstens einer in und/oder an dem Innen- oder Außenring (1, 2) vorgesehenen Absaugeinrichtung (24, 24', 24") verbunden ist, die mit einer Schmierstoffversorgung (8, 9) verbunden ist, wobei die wenigstens eine Absaugeinrichtung (24, 24', 24") außen an dem Innen- oder dem Außenring (1, 2) derart befestigt ist, dass die wenigstens eine Bohrung (5) in einen Schmierstoffeinlass (30) einer Absaugeinrichtung (24, 24', 24") mündet, wobei die Absaugeinrichtung (24, 24', 24") außen an dem Innen- oder Außenring (1, 2) angeflanscht oder in der Bohrung (5) als Einsatzpatrone aufgenommen ist.

2. Lageranordnung nach Anspruch 1, **dadurch gekennzeichnet, dass** die Bohrung mit wenigstens einem in und/oder an dem Innen- oder Außenring (1, 2) vorgesehenen Zumessventil (6) verbunden ist, das mit der Schmierstoffversorgung (8, 9) verbunden ist.

3. Lageranordnung nach Anspruch 2, **dadurch gekennzeichnet, dass** in der wenigstens einen Bohrung (5) das Zumessventil (6) als Einsatzpatrone aufgenommen ist.

4. Lageranordnung nach Anspruch 1 oder 2, **dadurch gekennzeichnet, dass** in dem Außenring (1) und/oder in dem Innenring (2) eine erste Bohrung (5), in der ein Zumessventil (6) aufgenommen ist, und wenigstens eine weitere Bohrung (5) vorgesehen ist, In der eine Absaugeinrichtung (24, 24', 24") als Einsatzpatrone aufgenommen ist, die mit einem Schmierstoffsammelbehälter verbunden ist.

5. Lageranordnung nach einem der vorhergehenden Ansprüche, **dadurch gekennzeichnet, dass** zwischen dem Außenring (1) und dem Innenring (2) eine oder mehr Reihen von Wälzkörpern (3) nebeneinander angeordnet sind.

6. Lageranordnung nach einem der Ansprüche 1 bis 5, **dadurch gekennzeichnet, dass** jeder Wälzkörperreihe (3) wenigstens ein Zumessventil (6) und/oder wenigstens eine insbesondere durch den Druck des dem Zumessventils (6) zugeführten Schmierstoffs antreibbare Absaugeinrichtung (24, 24', 24") zugeordnet ist, wobei mehrere Zumessventile (6) bzw. Absaugeinrichtungen (24, 24', 24") über eine gemeinsame Schmlerstoffversorgung (8, 9) miteinander verbunden sind.

7. Lageranordnung nach einem der Ansprüche 1 bis 6, **dadurch gekennzeichnet, dass** das wenigstens eine Zumessventil (6) und/oder die wenigstens eine Absaugeinrichtung (24, 24', 24") über einen insbesondere in die wenigstens eine Bohrung eingeschraubten Adapter (7) in dem Außenring (1) bzw. dem innenring (2) fixiert und an die Schmierstoffversorgung angeschlossen ist.

8. Lageranordnung nach Anspruch 2, **dadurch gekennzeichnet, dass** das wenigstens eine Zumessventil (6) außen an dem Innen- oder dem Außenring (1, 2) derart befestigt ist, dass die wenigstens eine Bohrung (5) in einen Schmierstoffauslass (13) eines Zumessventils (6) mündet.

9. Lageranordnung nach Anspruch 8, **dadurch gekennzeichnet, dass** das wenigstens eine Zumessventil (6) außen an dem Innen- oder dem Außenring (1, 2) angeflanscht ist.

10. Lageranordnung nach einem der vorhergehenden Ansprüche, **dadurch gekennzeichnet, dass** mehrere Absaugeinrichtungen (24, 24', 24") über eine gemeinsame Rückführleitung (25) mit einem Schmierstoffsammeibehälter verbunden sind.

11. Lageranordnung nach einem der vorhergehenden Ansprüche, **dadurch gekennzeichnet, dass** diese Bestandteil einer Baumaschine oder einer Windkraftanlage ist.

12. Lageranordnung nach einem der vorhergehenden Ansprüche, **dadurch gekennzeichnet, dass** das Zumessventil (6) mit einem Schmierstoffeinlass und dem einer zu schmierenden Stelle (3) zugewandten Schmierstoffauslass (13), zwischen denen in einer Hülse (11), die zusammen mit einer Einlasskappe (10) als eine in eine Bohrung (5) einsetzbare oder einschraubbare Einsatzpatrone ausgebildet ist, ein Dichtungskolben (15) und ein Förderkolben (18) verschiebbar geführt sind, wobei der Dichtungskolben (15) eine umlaufende Dichtlippe (21) aufweist, die ein Durchströmen eines Schmierstoffes in Förderrichtung erlaubt und ein Zurückströmen des Schmierstoffes verhindert, und zwischen einer einen Druckentlastungskanal (12, 19) freigebenden und einer diesen sperrenden Stellung verschiebbar ist, und wobei der Förderkolben (18) gegen die Kraft eines elastischen Elements (22) zur Förderung von Schmierstoff zu der zu schmierenden Stelle (3) in Förderrichtung und zum Ansaugen von Schmierstoff durch die Kraft des elastischen Elements (22) entgegen der Förderrichtung verschiebbar ist.

13. Lageranordnung nach Anspruch 12, **gekennzeichnet durch** einen Adapter (7) mit einem Außengewinde zum Fixieren der Einsatzpatrone in einer Gewindebohrung (5), wobei die Einsatzpatrone zumindest bereichswelse einen kleineren Außendurchmesser als der Adapter (7) aufweist.

14. Lageranordnung nach Anspruch 13, **dadurch gekennzeichnet, dass** der Druckentlastungskanal (12, 19) zumindest abschnittsweise entlang der Außenfläche der Einsatzpatrone in einem aufgrund des gegenüber dem Adapter (7) verringerten Außendurchmessers gebildeten Spalt (12) verläuft.

15. Lageranordnung nach einem der Ansprüche 12 bis 14, **dadurch gekennzeichnet, dass** der Schmierstoffauslass (13) ohne Zwischenschaltung einer Schmierleitung in direkter Verbindung mit der zu schmierenden Stelle (3) steht.

16. Lageranordnung nach einem der Ansprüche 1 bis 11, **dadurch gekennzeichnet, dass** die Absaugelnrichtung (24, 24', 24") mit dem Schmierstoffeinlass (30) und einem Schmierstoffauslass (32), zwischen denen in einer Hülse (26), die vorzugsweise als eine in eine Bohrung (27) einsetzbare oder einschraubbare Einsatzpatrone ausgebildet ist, ein erster Kolben (28) derart verschiebbar geführt ist, dass der erste Kolben (28) in einer ersten Bewegungsrichtung Schmierstoff aus dem Schmierstoffeinlass in die Hülse (26) einsaugt und in einer zweiten, der ersten Bewegungsrichtung entgegengesetzten Bewegungsrichtung Schmierstoff durch den Schmierstoffauslass (32) aus der Hülse (26) fördert, wobei das Zumessventil (6) und die Absaugeinrichtung (24, 24', 24") über eine gemeinsame Schmierstoffversorgung (9) zur Zufuhr von unter Druck stehendem Schmierstoff derart miteinander verbunden sind, dass der erste Kolben (28) der Absaugeinrichtung (24, 24', 24") durch den unter Druck stehenden Schmierstoff der Schmierstoffversorgung (9) gegen die Kraft eines elastischen Elements (29, 29a) in eine der beiden Bewegungsrichtungen und durch die Kraft des elastischen Elements (29, 29a) in die andere der beiden Bewegungsrichtungen verschiebbar ist.

17. Lageranordnung nach Anspruch 16, **dadurch gekennzeichnet, dass** in der Hülse (26) eine Zylinderbohrung vorgesehen ist, in welche der Schmierstoffeinlass (30), der Schmierstoffauslass (32) und die Schmierstoffversorgung (9) münden und in welcher der erste Kolben (28) sowie ein weiterer Kolben (28a) derart verschiebbar geführt sind, dass der erste Kolben (28) durch Druck des Schmierstoffs aus der Schmierstoffversorgung (9) aus einer den Schmierstoffeinlass (30) freigebenden Stellung in eine den Schmierstoffeinlass verschließende Stellung bewegbar ist, wobei der weitere Kolben durch den ersten Kolben aus einer den Schmierstoffauslass verschließenden Stellung in eine den Schmierstoffauslass freigebende Stellung bewegbar ist.

## Claims

1. A bearing arrangement with an outer ring (1) and an inner ring (2), which are rotatable relative to one another, and with rolling bodies, particularly ball bearings (3), disposed between the outer ring (1) and the inner ring (2), in which case at least one bore (5), preferably extending in radial direction, is provided in the outer ring (1) and/or inner ring (2), **characterized in that** the bore (5) is connected to at least one suction device (24, 24', 24") which is provided in and/or on the inner or outer ring (1, 2) and which is connected to a lubricant supply (8, 9), the at least one suction device (24, 24', 24") being fixed to the outside of the inner or outer ring (1, 2) in such a way that the at least one bore (5) opens into a lubricant inlet (30) of a suction device (24, 24', 24"), and the suction device (24, 24', 24") being flange-mounted on the outside of the inner or outer ring (1, 2) or received in the bore (5) as an insertable cartridge.

2. A bearing arrangement according to Claim 1, **characterized in that** the bore is connected to at least one metering valve (6) provided in and/or on the inner or outer ring (1, 2), said metering valve (6) being connected to the lubricant supply (8, 9).

3. A bearing arrangement according to Claim 2, **characterized in that** the metering valve (6) is received in the at least one bore (5) as an insertable cartridge.

4. A bearing arrangement according to Claim 1 or 2, **characterized in that** in the outer ring (1) and/or in the inner ring (2) there is a first bore (5), in which a metering valve (6) is received, and at least one additional bore (5), in which a suction device (24, 24', 24") is received as an insertable cartridge which is connected to a lubricant collecting container.

5. A bearing arrangement according to one of the preceding claims, **characterized in that** one or more rows of rolling bodies (3) are disposed side by side between the outer ring (1) and the inner ring (2).

6. A bearing arrangement according to one of Claims 1 to 5, **characterized in that** at least one metering valve (6) and/or at least one suction device (24, 24', 24"), which is driven particularly by the pressure of the lubricant supplied to the metering valve (6), is associated with each row of rolling bodies (3), a number of metering valves (6) or suction devices (24, 24', 24") being connected to one another via a shared lubricant supply (8, 9).

7. A bearing arrangement according to one of Claims 1 to 6, **characterized in that** the at least one metering valve (6) and/or the at least one suction device (24, 24', 24") is fixed in the outer ring (1) or the inner ring (2), by way of an adapter (7) particularly screwed into the at least one bore, and is connected to the lubricant supply.

8. A bearing arrangement according to Claim 2, **characterized in that** the at least one metering valve (6) is fixed to the outside of the inner or outer ring (1, 2) in such a way that the at least one bore (5) opens into a lubricant outlet (13) of a metering valve (6).

9. A bearing arrangement according to Claim 8, **characterized in that** the at least one metering valve (6) is flange-mounted on the outside of the inner or outer ring (1, 2).

10. A bearing arrangement according to one of the preceding claims, **characterized in that** a number of suction devices (24, 24', 24") are connected to a lubricant collecting container via a shared return line (25).

11. A bearing arrangement according to one of the preceding claims, **characterized in that** it forms part of a construction machine or of a wind power plant.

12. A bearing arrangement according to one of the preceding claims, **characterized in that** the metering valve (6) has a lubricant inlet and the lubricant outlet (13) facing towards a point (3) to be lubricated, a sealing piston (15) and a delivery piston (18) being displaceably carried between said inlet and said outlet (13) in a sleeve (11) formed, together with an inlet cap (10), as an insertable cartridge that can be inserted or screwed into a bore (5), the sealing piston (15) having a circumferential sealing lip (21), which allows a lubricant to flow through in feed direction and prevents the lubricant from flowing back, said sealing piston (15) being displaceable between a position opening up a pressure relief channel (12, 19) and a position shutting off said channel (12, 19), and the delivery piston (18) being displaceable in feed direction, against the force of an elastic element (22), for delivering the lubricant to the point (3) to be lubricated and, as a result of the force of the elastic element (22), in the opposite direction for drawing off the lubricant.

13. A bearing arrangement according to Claim 12, **characterized by** an adapter (7) with an outer screw thread for fixing the insertable cartridge in a threaded bore (5), the insertable cartridge having, at least in some areas, a smaller outer diameter than the adapter (7).

14. A bearing arrangement according to Claim 13, **characterized in that** the pressure relief channel (12, 19) extends, at least in part, along the outer surface of the insertable cartridge in a gap (12) formed as a result of the reduced outer diameter of the cartridge compared with the adapter (7).

15. A bearing arrangement according to one of Claims 12 to 14,**characterized in that** the lubricant outlet (13) is in direct contact with the point (3) to be lubricated without the interposition of a lubrication line.

16. A bearing arrangement according to one of Claims 1 to 11, **characterized in that** the suction device (24, 24', 24") has the lubricant inlet (30) and a lubricant outlet (32), a first piston (28) being displaceably carried between said inlet (30) and outlet (32) in a sleeve (26), preferably formed as an insertable cartridge that can be inserted or screwed into a bore (27), in such a way that, in a first direction of movement, the first piston (28) draws lubricant into the sleeve (26) from the lubricant inlet and, in a second direction of movement counter to the first direction of movement, delivers lubricant from the sleeve (26) out through the lubricant outlet (32), in which case the metering valve (6) and the suction device (24, 24', 24") are connected to one another, via a shared lubricant supply (9) for delivery of the pressurized lubricant, in such a way that the first piston (28) of the suction device (24, 24', 24") can be displaced by the pressurized lubricant of the lubricant supply (9) against the force of an elastic element (29, 29a) in one of the two directions of movement and, by the force of the elastic element (29, 29a), in the other one of the two directions of movement.

17. A bearing arrangement according to Claim 16, **characterized in that** provided in the sleeve (26) there is a cylinder bore, into which the lubricant inlet (30), the lubricant outlet (32) and the lubricant supply (9) open, and the first piston (28) as well as an additional piston (28a) are displaceably carried in said bore in such a way that the first piston (28) can be moved by the pressure of the lubricant from the lubricant supply (9) from a position opening the lubricant inlet (30) into a position closing off the lubricant inlet, whereas the additional piston can be moved by the first piston from a position closing off the lubricant outlet into a position opening the lubricant outlet.

## Revendications

1. Système de paliers comprenant une bague extérieure (1) et une bague intérieure (2), qui peuvent tourner l'une par rapport à l'autre, et des corps de roulement, en particulier des billes (3) qui sont disposées entre la bague extérieure (1) et la bague intérieure (2), sachant que dans la bague extérieure (1) et/ou la bague intérieure (2), au moins un alésage (5) de préférence radial est prévu, **caractérisé en ce que** l'alésage (5) est relié à au moins un dispositif d'aspiration (24, 24', 24") prévu dans et/ou sur la bague extérieure ou intérieure (1, 2), lequel est relié à une alimentation en lubrifiant (8, 9), sachant que l'au moins un dispositif d'aspiration (24, 24', 24") est ainsi fixé à l'extérieur sur la bague extérieure ou intérieure (1, 2) que l'au moins un perçage (5) débouche dans une entrée de lubrifiant (30) d'un dispositif d'aspiration (24, 24', 24"), sachant que le dispositif d'aspiration (24, 24', 24") est bridé à l'extérieur sur la bague extérieure ou intérieure (1, 2) ou reçu en tant que cartouche d'utilisation dans l'alésage (5).

2. Système de paliers selon la revendication 1, **caractérisé en ce que** l'alésage est relié à au moins une valve doseuse (6) prévue dans et/ou sur la bague extérieure ou intérieure (1, 2), qui est reliée à l'alimentation en lubrifiant (8, 9).

3. Système de paliers selon la revendication 2, **caractérisé en ce que** la valve doseuse (6) est reçue en tant que cartouche d'utilisation dans l'au moins un alésage (5).

4. Système de paliers selon la revendication 1 ou 2, **caractérisé en ce qu'**un premier alésage (5) dans lequel est reçue une valve doseuse (6) et au moins un alésage supplémentaire (5), est prévu dans et/ou la bague extérieure ou intérieure (1, 2), dans lequel un dispositif d'aspiration (24, 24', 24") est reçu en tant que cartouche d'utilisation, laquelle est reliée à un réservoir de lubrifiant.

5. Système de paliers selon l'une des revendications précédentes, **caractérisé en ce qu'**une ou plusieurs rangée(s) de corps de roulement (3) sont disposées l'une à côté de l'autre entre la bague extérieure (1) et la bague intérieure (2).

6. Système de paliers selon l'une des revendications 1 à 5, **caractérisé en ce que** chaque rangée de corps de roulement (3) correspond à au moins une valve doseuse (6) et/ou au moins un dispositif d'aspiration (24, 24', 24") pouvant être entraîné en particulier par la pression du lubrifiant amené à la valve doseuse (6), sachant que plusieurs valves doseuses (6) respectivement dispositifs d'aspiration (24, 24', 24") sont reliés entre elles via une alimentation en lubrifiant commune (8, 9).

7. Système de paliers selon l'une des revendications 1 à 6, **caractérisé en ce que** l'au moins une valve doseuse (6) et/ou l'au moins un dispositif d'aspiration (24, 24', 24") sont fixés, via un adaptateur (7) vissé dans l'au moins un alésage, dans la bague extérieure (1) respectivement la bague intérieure (2) et raccordés à l'alimentation en lubrifiant.

8. Système de paliers selon la revendication 2, **caractérisé en ce que** l'au moins une valve doseuse (6) est ainsi fixée à l'extérieur sur la bague extérieure ou intérieure (1, 2) que l'au moins un alésage (5) débouche dans une sortie de lubrifiant (13) d'une valve doseuse (6).

9. Système de paliers selon la revendication 8, **caractérisé en ce que** l'au moins une valve doseuse (6) est bridée à l'extérieur sur la bague extérieure ou intérieure (1, 2).

10. Système de paliers selon l'une des revendications précédentes, **caractérisé en ce que** plusieurs dispositifs d'aspiration (24, 24', 24") sont reliés à un réservoir de lubrifiant via une conduite de retour (25) commune.

11. Système de paliers selon l'une des revendications précédentes, **caractérisé en ce qu'**il est une composante d'un engin ou d'une éolienne.

12. Système de paliers selon l'une des revendications précédentes, **caractérisé par** la valve doseuse (6) avec l'entrée de lubrifiant et la sortie de lubrifiant (13) tournée vers un point à lubrifier (3), entre lesquelles dans un manchon (11), qui conjointement avec un bouchon d'entrée (10) est formé en tant que cartouche d'utilisation pouvant être insérée ou vissée dans un alésage (5), un piston d'étanchéité (15) et un piston d'avancée (18) sont dirigés en pouvant être poussés, sachant que le piston d'étanchéité (15) présente une lèvre d'étanchéité périphérique (21) qui empêche une traversée du lubrifiant dans le sens d'avancée et un retour du lubrifiant, et peut être poussé entre une position libérant un canal de décompression (12, 19) et une position le fermant, et sachant que le piston d'avancée (18) peut être poussé contre la force d'un élément élastique (22) pour faire avancer le lubrifiant vers le point à lubrifier (3) dans le sens d'avancée et pour aspirer du lubrifiant par la force de l'élément élastique (22) contre le sens d'avancée.

13. Système de paliers selon la revendication 12, **caractérisé par** un adaptateur (7) comprenant un filetage mâle pour fixer la cartouche d'utilisation dans un alésage fileté (5), sachant que la cartouche d'utilisation présente au moins par tronçons un diamètre extérieur plus petit que l'adaptateur (7).

14. Système de paliers selon la revendication 13, **caractérisé en ce que** le canal de décompression (12, 19) passe au moins par tronçons le long de la surface extérieure de la cartouche d'utilisation dans une fente (12) formée en raison du diamètre extérieur réduit par rapport à l'adaptateur (7).

15. Système de paliers selon l'une des revendications 12 à 14, **caractérisé en ce que** la sortie de lubrifiant (13) est en liaison directe avec le point à lubrifier (3), sans montage intermédiaire d'une conduite de lubrification.

16. Système de paliers selon l'une des revendications 1 à 11, **caractérisé par** le dispositif d'aspiration (24, 24', 24") avec l'entrée de lubrifiant (30) et une sortie de lubrifiant (32), entre lesquelles dans un manchon (26) qui est formé de préférence en tant que cartouche d'utilisation pouvant être insérée ou vissée dans un alésage (27), un premier piston (28) est ainsi dirigé en pouvant être poussé que le premier piston (28) aspire du lubrifiant de la sortie de lubrifiant dans le manchon (26), dans un premier sens, et dans un deuxième sens inverse au premier sens, fait sortir du lubrifiant du manchon (26) via la sortie de lubrifiant (32), sachant que la valve doseuse (6) et le dispositif d'aspiration (24, 24', 24") sont reliés entre eux vi une alimentation en lubrifiant commune (9) pour amener le lubrifiant sous pression, de telle façon que le premier piston (28) du dispositif d'aspiration (24, 24', 24") peut être poussé par le lubrifiant sous pression de l'alimentation en lubrifiant (9) contre la force d'un élément élastique (29, 29a) dans un des deux sens et par la force de l'élément élastique (29, 29a) dans l'autre des deux sens.

17. Système de paliers selon la revendication 16, **caractérisé en ce qu'**un alésage cylindrique est prévu dans le manchon (26), dans lequel débouchent l'entrée de lubrifiant (30), la sortie de lubrifiant (32) et l'alimentation en lubrifiant (9) et dans lequel le premier piston (28) ainsi qu'un piston supplémentaire (28a) sont ainsi guidés en pouvant être déplacés que le premier piston (28) peut être déplacé par la pression du lubrifiant hors de l'alimentation en lubrifiant (9), d'une position libérant l'entrée de lubrifiant (30) vers une position fermant l'entrée de lubrifiant, sachant que le piston supplémentaire peut être déplacé par le premier piston, d'une position fermant la sortie de lubrifiant vers une position libérant la sortie de lubrifiant.
